# EUROPEAN PATENT SPECIFICATION

(11) **EP 1 512 781 B1**
(45) Date of publication and mention of the grant of the patent: **16.04.2008**
(21) Application number: 04018816.1
(22) Date of filing: 09.08.2004
(51) Int. Cl.: D03D 47/36, B65H 59/26, F16D 65/12

(54) **Self-adjusting braking device for weft feeders for looms**
Selbsteinstellende Fadenbremsvorrichtung für Fadenliefervorrichtungen für Webmaschinen
Moteur de frein à réglage automatique pour fournisseurs de fil pour des métiers à tisser

(30) Priority: 04.09.2003 IT TO20030135
(43) Date of publication of application: 09.03.2005
(73) Proprietor: L.G.L. Electronics S.p.A., 24024 Gandino (Bergamo) (IT)
(72) Inventor: Zenoni, Pietro, 24026 Leffe (BG) (IT); Castelli, Rosario, 24024 Gandino (BG) (IT)
(74) Representative: Spandonari, Carlo

(56) References cited:
- EP-A- 0 536 088
- EP-A- 1 215 152
- US-B1- 6 338 881
- PATENT ABSTRACTS OF JAPAN vol. 016, no. 126 (C-0923), 31 March 1992 (1992-03-31) & JP 03 292385 A (TERUYUKI TSUNABUCHI), 24 December 1991 (1991-12-24)

## Description

The present invention relates to an improved self-adjusting braking device for weft feeders for looms or other textile machines.

A loom generally includes a weft-feeding device which comprises a motor housing supporting a stationary drum on which a swivel arm, which is keyed to a motorized shaft, winds a plurality of yarn loops forming a weft reserve. The yarn, while unwinding from the drum to feed the loom, is slowed down by a self-adjusting braking device as described in IT-A- 1.251.209, which consists of a frustoconical braking member that is elastically and coaxially biased to press its internal surface against a bevelled delivery edge of the drum. The braking member is mounted on a movable support, whose axial position is adjustable to change the value of the static contact pressure of the frustoconical braking member against the drum, in a resting position.

The yarn runs between the drum and the frustoconical braking member and applies the axial component of its mechanical tension upon the braking member, which tension is proportional to the running speed of the yarn. It follows that, as such speed is increased, the braking member is axially pulled away from the drum, thereby causing a corresponding weakening of the braking action.

The frustoconical braking member is typically made of a fabric which is impregnated, or plated, with high-strength synthetic fibres, such as carbon fibres or "kevlar", and is provided with a wearproof metal lining consisting of a high-strength steel foil extendingalong the area that is to contact the drum. Such foil has a high friction coefficient, whose value rapidly rises up as a function of the running speed of the yarn. Thus, particularly in case of thin weft yarns, e.g. yarns with counts in the range of 5 to 150 deniers, the elastic pressure of the frustoconical member against the drum must be set to low values to prevent the yarn from breaking.

However, this circumstance causes irregular braking actions along the circular unwinding path of the loops, due to the unavoidable tolerance in matching the braking member with the drum. Such tolerance, in case of higher contact pressures, is compensated by elastic deformation of the braking member. As a consequence, the yarn, while unwinding from the drum, is continuously subjected to tension changes which are not satisfactorily followed by the self-adjusting system.

In an attempt to overcome this drawback, it is known from prior IT-A- 1.289.724 to subject the steel foil to a ionic nitriding process to form a harder external layer on the foil, with a lower friction coefficient. This makes it possible to set the contact pressure to slightly higher values and to reduce the irregularities of the braking action.

However, such method is still unsatisfactory both in relation to the friction coefficient, which is still too high (about 0,3), so that the value of the static pressure cannot be significantly increased to achieve uniform braking actions, and in relation to the hardness of the outer layer of the foil which, though increased (about 1800-Vickers), is still too low, so that frequent replacements of the braking member are still required.

A self-adjusting braking device comprising a frustoconical braking member lined with a wear proof steel foil according to the preamble of claim 1 is known from EP 1215152 A₂

A main object of the present invention is to provide an improved self-adjusting braking device for weft feeders for looms, by which it is possible both to set the static pressure of the braking member upon the drum to higher values, in order to compensate the matching inaccuracies affecting the engagement of the braking member onto the drum, and to extend the life of the braking member.

Said object and other aims and advantages, which will better appear below, are achieved by the braking device having the features recited in claim 1.

The invention will be now described in more detail with reference to the attached drawings shown by way of non limiting example, wherein:
Fig. 1 is a side view of a weft feeder provided with a self-adjusting braking device;
Fig. 2 is a perspective view of the frustoconical braking member of the self-adjusting braking device, as improved according to the invention;
Fig. 3 is a cross section view to an enlarged scale of the frustoconical braking member of Fig. 2, made along the plane III-III.

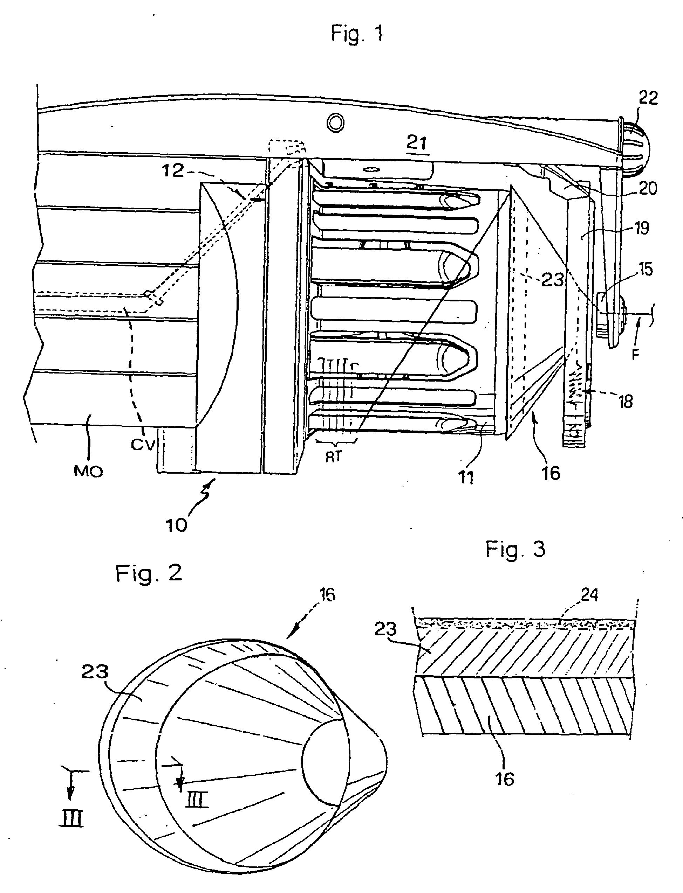

With reference to Fig. 1, a weft feeder 10 comprises a motor housing MO on which is coaxially supported a stationary drum 11 on which a swivel arm 12, which is keyed to a hollow motorized shaft CV, winds a plurality of yam loops F forming a weft reserve RT.

On request of the loom, yarn F is unwound from drum 11 and passes through a yarn-guide eyelet 15 which is coaxial to the drum.

The mechanical tension of the yarn F unwinding from the drum is modulated by a self-adjusting braking device comprising a frustoconical braking member 16, which is coaxially arranged with its main base in front of drum 11 and is elastically biased with its internal surface against a bevelled delivery edge of the drum. To this purpose, braking member 16 is centrally supported on a star-arranged assembly of helical springs 18 which are mounted in traction on an annular support 19 supported on a slide 20. Slide 20 is axially movable on a guide 21 and is lockable in a resting position to set the static contact pressure of the frustoconical braking member against the drum. To this purpose, slide 20 is operatively connected to a worm gearing (not shown) which is operatable by a knob 22.

The frustoconical braking member is made of a fabric that is impregnated, or plated, with high-strength synthetic fibres, such as carbon fibres or "kevlar", and is provided with a wearproof metal lining consisting of a high-strength steel foil 23 extending nearby its rim along the area that is to contact the drum.

In a way known per se, the yarn runs between the drum and the frustoconical braking member and applies the axial component of its mechanical tension upon the braking member, which tension is proportional to the running speed of the yarn. It follows that, as such speed is increased, the braking member is axially pulled away from the drum and the braking action is correspondingly weakened. This provides the desired self-adjusted braking action.

According to this invention, the operative area of metal sheet 23 is coated with a coating 24 of amorphous carbon, known as DLC (Diamond-Like Coating). This make it possible to set the contact pressure to high values, in order to compensate the unavoidable tolerance in matching the braking member 16 with the drum 11, and, together, to prevent the yarn from breaking by friction against sheet 23.

The above-mentioned coating feature has a high hardness (3500 to 6000 - HV) and a low friction coefficient (0,05 to 0,2), and is typically used to line rigid, mechanical components in mutually sliding relation, such as guides, and the like.

The DLC coating can be deposited by subjecting the foil to a process known as CVD (Chemical Vapour Deposition), where a mixture of gases is supplied to a reactor and is heated and pressurized to cause a reaction of condensation on the sublayer to be coated. The deposition is achieved by reduction of a halide or by pyrolysis of a compound by means of a chemical reaction that is catalyzed by the sublayer in a region of the reactive atmosphere near the sublayer. Since the sublayer must be heated up to a temperature equal to the reaction temperature of the gases, in order to achieve the reaction of condensation of the gases, the foil must be capable of resisting to high temperatures without deforming or reacting.

In order to enhance the chemical reaction and to lower the temperature of the sublayer, a process PECVD (Plasma Enhanced CVD) is used, where the chemical activation is provided by an electric discharge in the gas under processing, at a pressure in the range of 3 to 10 mbar and a temperature of the reaction gas in the range of 450 to 600 °C, while the temperature of the sublayer does not exceed 200 °C. Within this range of pressures, a adequate potential difference causes a discharge of glow in the gas, which generates ionised gas or plasma. Most of the gas is chemically activated by the electrons by dissociation of the smallest or radical molecules which react, as well known, by impacting the surface, thereby forming a thin film.

A preferred embodiment of the invention has been described, but it is evident that many changes may be made by a person skilled in the art, depending on the circumstances, within the scope of the inventive concept.

## Claims

1. A self-adjusting braking device for weft feeders provided with a stationary drum (11) on which are wound yarn loops (F) to be fed to a downstream textile machine, the braking device comprising a frustoconical braking member (16) which is coaxially arranged with its main base in front of the drum (11), is elastically biased against the drum (11), and is lined with a wearproof steel foil (23) extending along its inner, annular area that is to engage a delivery edge of the drum, **characterized in that** the contact area of the foil (23) is provided with a coating (24) of amorphous carbon, generally known as DLC (Diamond-Like Coating).

## Patentansprüche

1. Selbsteinstellende Bremsvorrichtung für Schussgeräte, die mit einer stationären Trommel (11) versehen sind, auf die einer stromabwärts gelegenen Textilmaschine zuzuführende Garnschlaufen (F) gewickelt werden, wobei die Bremsvorrichtung ein kegelstumpfförmiges Bremsbauteil (16) aufweist, das mit seiner Hauptbasis koaxial vor der Trommel (11) angeordnet ist, elastisch gegen die Trommel (11) gedrängt ist und mit einer verschleißfesten Stahlfolie (23) ausgekleidet ist, die sich längs seines inneren, ringförmigen Bereichs zum Berühren eines Abgaberandes der Trommel erstreckt, **dadurch gekennzeichnet, dass** der Kontaktbereich der Folie (23) mit einer Beschichtung (24) aus amorphem Kohlenstoff versehen ist, allgemein bekannt als DLC (Diamond-Like Coating = diamantartige Beschichtung).

## Revendications

1. Dispositif de freinage auto-ajusté pour dévidoirs de fil de trame, doté d'un tambour stationnaire (11) sur lequel des boucles de fil (F) sont enroulées pour alimenter une machine textile située en aval, le dispositif de freinage comprenant un élément tronconique de freinage (16) agencé coaxialement avec sa base principale devant le tambour (11), sollicité élastiquement contre le tambour (11) et garni d'une tôle (23) d'acier résistant à l'usure qui s'étend sur sa zone annulaire intérieure destinée à engager le bord de fourniture du tambour, **caractérisé en ce que** la zone de contact de la tôle (23) est dotée d'un revêtement (24) de carbone amorphe généralement appelé DLC ("diamond-like coating" - revêtement de type diamant).
